# EUROPÄISCHE PATENTSCHRIFT

(11) **EP 3 462 710 B1**
(45) Veröffentlichungstag und Bekanntmachung des Hinweises auf die Patenterteilung: **15.01.2020**
(21) Anmeldenummer: 17194062.0
(22) Anmeldetag: 29.09.2017
(51) Int. Cl.: H04L 29/12

(54) **VERFAHREN ZUR BEREITSTELLUNG EINES NAMENSDIENSTES INNERHALB EINES INDUSTRIELLEN AUTOMATISIERUNGSSYSTEMS UND SWITCH**
METHOD FOR PROVIDING A NAME SERVICE WITHIN AN INDUSTRIAL AUTOMATION SYSTEM AND SWITCH
PROCÉDÉ DE PRÉPARATION D'UN SERVICE DE DÉNOMINATION DANS UN SYSTÈME DE COMMUNICATION INDUSTRIELLE ET COMMUTATEUR

(43) Veröffentlichungstag der Anmeldung: 03.04.2019
(73) Patentinhaber: Siemens Aktiengesellschaft, 80333 München (DE)
(72) Erfinder: Albrecht, Harald, 90475 Nürnberg (DE)

(56) Entgegenhaltungen:
- SINGH W BEEBEE CISCO SYSTEMS H ET AL: "Basic Requirements for IPv6 Customer Edge Routers; rfc7084.txt", BASIC REQUIREMENTS FOR IPV6 CUSTOMER EDGE ROUTERS; RFC7084.TXT, INTERNET ENGINEERING TASK FORCE, IETF; STANDARD, INTERNET SOCIETY (ISOC) 4, RUE DES FALAISES CH- 1205 GENEVA, SWITZERLAND, 22. November 2013 (2013-11-22), Seiten 1-21, XP015094909, [gefunden am 2013-11-22]
- JEONG SUNGKYUNKWAN UNIVERSITY S PARK SAMSUNG ELECTRONICS L BELOEIL ORANGE S MADANAPALLI NTT DATA J: "IPv6 Router Advertisement Options for DNS Configuration; rfc8106.txt", IPV6 ROUTER ADVERTISEMENT OPTIONS FOR DNS CONFIGURATION; RFC8106.TXT, INTERNET ENGINEERING TASK FORCE, IETF; STANDARD, INTERNET SOCIETY (ISOC) 4, RUE DES FALAISES CH- 1205 GENEVA, SWITZERLAND, 17. März 2017 (2017-03-17), Seiten 1-19, XP015117691, [gefunden am 2017-03-17]

## Beschreibung

Verfahren zur Bereitstellung eines Namensdienstes inner-halb eines industriellen Automatisierungssystems und Switch Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

RFC 7084 "Basic Requirements for IPv6 Customer Edge Routers", November 2013 offenbart einen Customer Edge Router, dem IPv6 Adress-Präfixe delegiert werden und der hieraus und aus einer erhaltenen DNS Server Adresse ein neues Router Advertisement genereriert und versendet.

In EP 2 940 926 B1 ist ein Verfahren zur Konfiguration eines Kommunikationsgeräts innerhalb eines industriellen Automatisierungssystems beschrieben, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

Aus EP 2 940 972 B1 ist ein Verfahren zur Bereitstellung eines Namensdienstes innerhalb eines industriellen Kommunikationssystems bekannt, bei dem IPv6-Präfixe durch Router mittels Nachrichten mit Router-Bekanntgaben in jeweils unterlagerten Teilnetzen verbreitet werden. Dabei umfassen die Router-Bekanntgaben einen topologischen bzw. hierarchischen Namensbestandteil des jeweiligen Routers, der einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte selbständig ihren Gerätenamen.

EP 2 955 904 B1 betrifft ein Verfahren zur Vergabe von Kommunikationsnetzadressen für Netzteilnehmer eines segmentierten Netzes mit mehreren Subnetzen. Die Subnetze sind jeweils über einen Subnetz-Router an ein sie verbindendes Sammelnetz angeschlossen. Dabei wird von den Subnetz-Routern durch einen Austausch von über das Sammelnetz verteilten Router-Nachrichten dezentral ein gemeinsamer Adressbereich ermittelt, und innerhalb des Adressbereichs werden Kommunikationsnetzadressen für die Netzteilnehmer festgelegt.

Aus EP 3 062 490 A1 ist bekannt, dass zur Datenübermittlung innerhalb eines industriellen Automatisierungssystems, das zumindest ein Teilnetz mit einer Gruppe von Kommunikationsgeräten und einem Teilnetz-Steuerungsgerät umfasst, eine dem Teilnetz-Steuerungsgerät zugeordnete Namens- oder Konfigurationsdienstkomponente für die Gruppe von Kommunikationsgeräten IPv4-Adressen und zugeordnete Gerätenamen erfasst. Für die Gruppe von Kommunikationsgeräten wird aus einem dem Teilnetz zugeordneten IPv6-Präfix und den IPv4-Adressen der Kommunikationsgeräte jeweils eine IPv6-Adresse berechnet. Aus den IPv4-Adressen der Kommunikationsgeräte und den berechneten IPv6-Adressen werden Adressumsetzungsregeln ermittelt, die durch eine dem Teilnetz-Steuerungsgerät zugeordnete Adressumsetzungseinheit für eine Adressumsetzung zwischen IPv4-Adressen und IPv6-Adressen angewendet werden. Die berechneten IPv6-Adressen und die zugeordneten Gerätenamen werden in einem übergeordneten Namensdienst-Server gespeichert.

In EP 3 076 636 B1 ist beschrieben, dass ein Namensdienst-Server eines industriellen Automatisierungssystems zur Bereitstellung eines Namensdienstes Nachrichten mit Router-Bekanntgaben versendet, die Informationen über eine IPv6-Adresse des Namensdienst-Servers umfassen. Kommunikationsendgeräte erzeugen aus mittels Router-Bekanntgaben innerhalb ihres jeweiligen Teilnetzes verbreiteten IPv6-Präfixen selbständig ihre IPv6-Adresse. Außerdem erzeugen Kommunikationsendgeräte aus topologischen bzw. hierarchischen Namensbestandteilen und einem innerhalb ihres jeweiligen Teilnetzes eindeutigen Namensbestandteil selbständig ihren Gerätenamen. Kommunikationsgeräte umfassen jeweils einen Namensdienst-Client für dynamisches DNS (Domain Name System), mittels dessen anhand der IPv6-Adresse des Namensdienst-Servers eine Speicherung einer IPv6-Adresse und eines zugeordneten Gerätenamens des jeweiligen Kommunikationsgeräts im Namensdienst-Server anfordert wird.

Zur Bereitstellung eines Namensdienstes innerhalb eines industriellen Automatisierungssystems überprüfen entsprechend EP 3 091 714 A1 Kommunikationsgeräte des industriellen Automatisierungssystems jeweils mittels einer Namensdienst-Komponente, ob dem jeweiligen Kommunikationsgerät ein Gerätename mit einem topologischen bzw. hierarchischen Namensbestandteil zugeordnet ist, der eine räumliche oder hierarchische Anordnung des jeweiligen Kommunikationsgeräts im wesentlichen vollständig bezeichnet. Bei einem positiven Überprüfungsergebnis behandeln die Kommunikationsgeräte jeweils ihren zugeordneten Gerätenamen als vollständigen Gerätenamen. Bei einem negativen Überprüfungsergebnis erzeugen die Kommunikationsgeräte jeweils aus mittels Nachrichten mit Router-Bekanntgaben verbreiteten topologischen bzw. hierarchischen Namensbestandteilen sowie einem innerhalb ihres jeweiligen Teilnetzes eindeutigen Namensbestandteil selbständig ihren vollständigen Gerätenamen.

In vielen Anwendungsfällen werden Unternehmens- bzw. Bürokommunikationsnetze (IT-Netze) separat von Kommunikationsnetzen industrieller Automatisierungssysteme administriert. Problematisch hierbei ist, wenn Automatisierungszellen über Router angebunden werden, die einem Unternehmens- bzw. Bürokommunikationsnetz zugeordnet sind und entsprechend administriert werden, und gleichzeitig eigene DNS-Server (Domain Name System) für die Automatisierungszellen gewünscht sind. Im Kontext von IPv6 (Internet Protocol Version 6) erschwert dies eine selbständige Konfiguration der DNS-Server der Automatisierungszellen. Insbesondere sollen Automatisierungszellen vielfach als einheitliche Sicherungsschicht-Broadcast-Domänen betrieben werden und IPv6 Router Advertisements mit Informationen über DNS-Server an alle Kommunikations- bzw. Automatisierungsgeräte in einer solchen Broadcast-Domänen verteilt werden. Hierzu ist es jedoch grundsätzlich erforderlich, dass Adresse und Namensraum eines DNS-Servers einer Automatisierungszelle für einen überlagerten Router bekannt sind. Prinzipiell lassen sich hieraus resultierende Probleme entweder durch einen manuellen Abgleich zwischen Router-Administration und Automatisierungszellen-Administration oder durch Verwendung jeweils eines zusätzlichen, weitestgehend unnötigen Routers pro Automatisierungszelle lösen.

Der vorliegenden Erfindung liegt die Aufgabe zugrunde, ein Verfahren zur effizienten Bereitstellung eines einfach und fehlerarm zu konfigurierenden Namensdienstes innerhalb eines industriellen Automatisierungssystems anzugeben sowie eine geeignete Vorrichtung zur Durchführung des Verfahrens zu schaffen.

Diese Aufgabe wird erfindungsgemäß durch ein Verfahren mit den in Anspruch 1 genannten Merkmalen und durch einen Switch mit den in Anspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Bereitstellung eines Namensdienstes innerhalb eines industriellen Automatisierungssystems umfasst das industrielle Automatisierungssystem mehrere Zellen mit jeweils mehreren Automatisierungsgeräten und einem Zellen-Switch, der die Automatisierungsgeräte innerhalb seiner Zelle zumindest mittelbar miteinander verbindet. Dabei können die Zellen-Switches jeweils die Automatisierungsgeräte innerhalb ihrer Zelle unmittelbar oder über weitere Switches miteinander verbinden. Die Zellen-Switches sind mit einem zugeordneten Router verbunden, der IPv6-Präfixe mittels Router-Bekanntgabe-Nachrichten, insbesondere Router Advertisements entsprechend IETF RFC 4861, in unterlagerte Teilnetze verbreitet. Vorzugsweise sind die Zellen-Switches jeweils vom zugeordneten Router separierte Kommunikationsgeräte. Die Zellen-Switches bzw. die Automatisierungsgeräte ermitteln anhand der von Router-Bekanntgabe-Nachrichten umfassten IPv6-Präfixe selbständig ihre jeweilige IPv6-Adresse.

Erfindungsgemäß werden durch die Zellen-Switches empfangene Router-Bekanntgabe-Nachrichten des zugeordneten Routers an eine Verteilereinheit, insbesondere ein Router Advertisement Relay, des jeweiligen Zellen-Switches weitergeleitet und durch die Verteilereinheit um eine Angabe über einen der jeweiligen Zelle zugeordneten Namensdienst-Server ergänzt. Vorzugsweise umfassen die Zellen-Switches jeweils den ihrer Zelle zugeordneten Namensdienst-Server. In diesem Fall umfassen die Zellen-Switches vorteilhafterweise jeweils eine Funktionseinheit zur Verarbeitung eines IPv6-Kommunikationsprotokollstacks, an die der jeweilige Namensdienst-Server gekoppelt ist.

Die Zellen-Switches verbreiten erfindungsgemäß die durch ihre Verteilereinheiten ergänzten Router-Bekanntgabe-Nachrichten an die Automatisierungsgeräte in ihrer jeweiligen Zelle, wobei die Zellen vorzugsweise jeweils als einheitliche Sicherungsschicht-Broadcast-Domäne betrieben werden. Insbesondere können die Angaben über den der jeweiligen Zelle zugeordneten Namensdienst-Server dabei mittels Recursive DNS Server Option entsprechend IETF RFC 8106 verbreitet werden. Durch die Automatisierungsgeräte von empfangenen Router-Bekanntgabe-Nachrichten umfasste Angaben über den der jeweiligen Zelle zugeordneten Namensdienst-Server werden an eine Namensdienst-Funktionseinheit des jeweiligen Automatisierungsgeräts weitergeleitet und durch die Namensdienst-Funktionseinheit für ihre Konfiguration verwendet. Die Namensdienst-Funktionseinheit kann beispielseise DNS-Client sein. Namensauflösungsanfragen der Automatisierungsgeräte werden mittels der jeweiligen Namensdienst-Funktionseinheit entsprechend ihrer Konfiguration an den zugeordneten Namensdienst-Server übermittelt werden. Da ein Zellen-Switch als ein vom zugeordneten IPv6-Router unabhängiges Gerät ausgeführt werden kann, ergibt sich mit dem erfindungsgemäßen Verfahren eine stark vereinfachte Administration, wenn Betrieb von Automatisierungsnetz und überlagertem IPv6-Router bzw. Unternehmens- oder Bürokommunikationsnetz in unterschiedliche Verantwortungsbereiche fallen. Darüber hinaus können sich die Zellen-Switches über bestehende Standard-IPv6-Methoden selbständig konsistent zum überlagerten IPv6-Router konfigurieren.

Entsprechend einer vorteilhaften Ausgestaltung des erfindungsgemäßen Verfahrens umfassen die durch die Zellen-Switches empfangenen Router-Bekanntgabe-Nachrichten des zugeordneten Routers eine Angabe über einen der jeweiligen Zelle übergeordneten Namensdienst-Server. Dabei wird die Angabe über den übergeordneten Namensdienst-Server jeweils zur Konfiguration des der jeweiligen Zelle zugeordneten Namensdienst-Servers verwendet. Dementsprechend werden die Namensauflösungsanfragen der Automatisierungsgeräte in Abhängigkeit von einem jeweils spezifizierten Domänennamen-Suffix entweder durch den Namensdienst-Server der jeweiligen Zelle behandelt oder durch diesen an den übergeordneten Namensdienst-Server zur Namensauflösung weitergeleitet. Damit können Namensauflösungsanfragen mit der jeweiligen Zelle nicht zugeordneten Domänennamen-Suffixes an den übergeordneten Namensdienst-Server delegiert werden.

Die durch die Zellen-Switches empfangenen Router-Bekanntgabe-Nachrichten des zugeordneten Routers umfassen vorzugsweise ein diesem Router zugeordnetes Domänennamen-Suffix und werden durch die Verteilereinheiten jeweils um eine Angabe über einen der jeweiligen Zelle zugeordneten Namen ergänzt. In diesem Fall verbreiten die Zellen-Switches die durch ihre Verteilereinheiten ergänzten Domänennamen-Suffixes mittels der Router-Bekanntgabe-Nachrichten für die Automatisierungsgeräte ihrer jeweiligen Zelle. Vorteilhafterweise werden die Domänennamen-Suffixes mittels DNS Search List Option entsprechend IETF RFC 8106 verbreitet.

Entsprechend einer weiteren vorteilhaften Ausgestaltung der vorliegenden Erfindung leiten die Automatisierungsgeräte von empfangenen Router-Bekanntgabe-Nachrichten umfasste Domänennamen-Suffixes jeweils an ihre Namensdienst-Funktionseinheit weiter. Die Domänennamen-Suffixes werden durch die Namensdienst-Funktionseinheiten jeweils für ihre Namensdienst-Konfiguration verwendet. Aus dem jeweiligen Domänennamen-Suffix und einem Host-Namen des jeweiligen Automatisierungsgeräts erzeugen die Namensdienst-Funktionseinheiten jeweils einen vollständig qualifizierten Domänennamen für das jeweilige Automatisierungsgerät. Vorzugsweise fordern die Automatisierungsgeräte jeweils mittels ihrer Namensdienst-Funktionseinheit eine Speicherung ihrer Kommunikationsnetzadresse sowie ihres vollständig qualifizierten Domänennamens in dem ihrer Zelle zugeordneten Namensdienst-Server an. Darüber hinaus werden die durch die Verteilereinheiten der Zellen-Switches ergänzten Domänennamen-Suffixes vorteilhafterweise jeweils zur Konfiguration des der jeweiligen Zelle zugeordneten Namensdienst-Servers verwendet werden.

Der erfindungsgemäße Switch für eine Zelle eines industriellen Automatisierungssystems umfasst mehrere Kommunikationsanschlüssen zur Verbindung mit von der Zelle umfassten Automatisierungsgeräten und zur Verbindung mit einem Router. Außerdem umfasst der Switch mehrere jeweils einem Kommunikationsanschluss zugeordnete Sende- und Empfangseinheiten. Zusätzlich weist der Switch ein Koppelelement auf, durch das die Sende- und Empfangseinheiten schaltbar miteinander verbindbar sind. Das Koppelelement kann beispielsweise ein Backplane-Switch mit zugeordnetem Controller sein. Darüber hinaus umfasst der Switch eine Verteilereinheit für Router-Bekanntgabe-Nachrichten.

Erfindungsgemäß ist der Switch dafür ausgestaltet und eingerichtet, anhand eines von einer empfangenen Router-Bekanntgabe-Nachricht umfassten IPv6-Präfixes seine IPv6-Adresse zu ermitteln und empfangene Router-Bekanntgabe-Nachrichten an die Verteilereinheit weiterzuleiten. Die Verteilereinheit ist dafür ausgestaltet und eingerichtet, empfangene Router-Bekanntgabe-Nachrichten um eine Angabe über einen der Zelle zugeordneten Namensdienst-Server zu ergänzen. Dabei ist der Switch dafür ausgestaltet und eingerichtet, die durch die Verteilereinheit ergänzten Router-Bekanntgabe-Nachrichten an die Automatisierungsgeräte in der Zelle zu verbreiten und Namensauflösungsanfragen der von der Zelle umfassten Automatisierungsgeräte an den der Zelle zugeordneten Namensdienst-Server zu übermitteln.

Die vorliegende Erfindung wird nachfolgend an einem Ausführungsbeispiel anhand der Zeichnung näher erläutert. Es zeigt die
- Figur: ein mehrere Zellen umfassendes industrielles Automatisierungssystem mit einem Engineering-System, einem Leitsystem und einem übergeordneten DNS-Server.

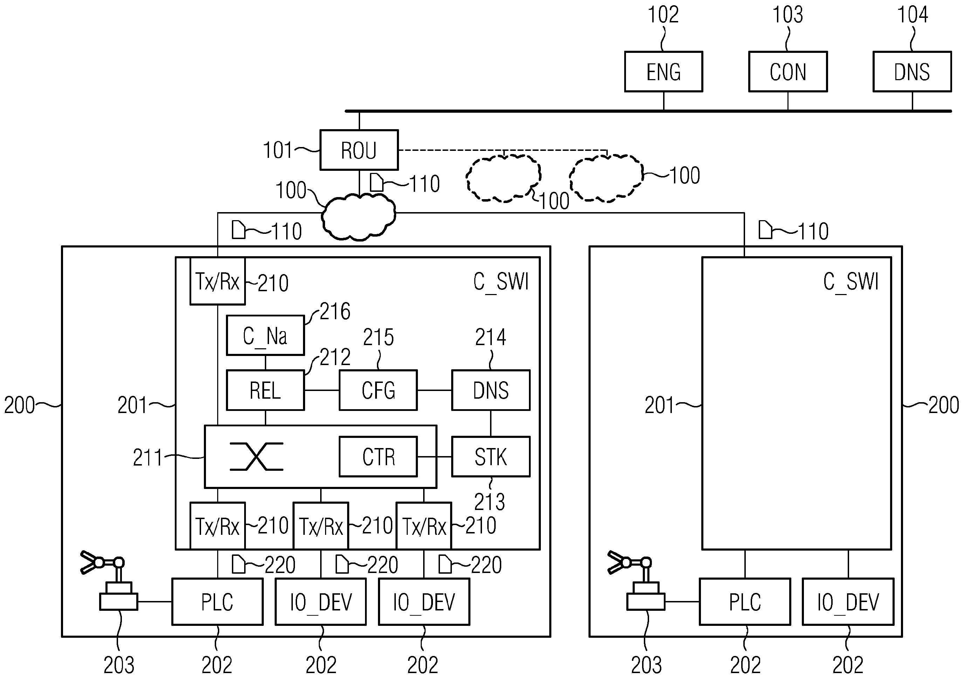

Das in Figur 1 dargestellte industrielle Automatisierungssystem umfasst ein Engineering-System 102 zur Projektierung von Automatisierungsgeräten, ein Leitsystem 103 zur deren Überwachung, einen übergeordneten DNS-Server 104 und mehrere gleichartige Zellen 200 mit jeweils mehreren Automatisierungsgeräten 202. Zusätzlich umfassen die Zellen 200 jeweils einen Zellen-Switch 201, an den die Automatisierungsgeräte 202 der jeweiligen Zelle 200 angeschlossen sind. Grundsätzlich können die Zellen 200 jeweils zusätzliche Switches zum Anschluss von Automatisierungsgeräten umfassen, die über diese zusätzlichen Switches mit dem jeweiligen Zellen-Switch 201 verbunden sind. Die Zellen 200 werden im vorliegenden Ausführungsbeispiel jeweils als einheitliche Sicherungsschicht-Broadcast-Domäne betrieben.

Das Engineering-System 102, das Leitsystem 103 und der übergeordnete DNS-Server 104 sind über einen IPv6-fähigen Router 101 mit mehreren Teilnetzen 100 verbunden, insbesondere mit einem industriellen Kommunikationsnetz, an das die Zellen 200 jeweils über ihren Zellen-Switch 201 angebunden sind. Dabei sind die Zellen-Switches 201 jeweils separate Kommunikationsgeräte und werden vorteilhafterweise vom Router 101 getrennt administriert. Der Router 101 verbreitet durch ihn verwaltete IPv6-Präfixe mittels Router-Bekanntgabe-Nachrichten 110 in unterlagerte Teilnetze 100.

Die Automatisierungsgeräte 202 können beispielsweise speicherprogrammierbare Steuerungen, Eingabe/Ausgabe-Einheiten (I/O-Module) oder Bedien- und Beobachtungsstationen sein. Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul kann eine speicherprogrammierbare Steuerung beispielsweise mit dem jeweiligen Zellen-Switch 201 oder mit einem Feldbus verbunden werden. Die Eingabe/Ausgabe-Einheit dient einem Austausch von Steuerungs- und Messgrößen zwischen der speicherprogrammierbaren Steuerung und einer durch die speicherprogrammierbare Steuerung gesteuerten Maschine oder Vorrichtung 203. Die Zentraleinheit ist insbesondere für eine Ermittlung geeigneter Steuerungsgrößen aus erfassten Messgrößen vorgesehen. Obige Komponenten der speicherprogrammierbaren Steuerung sind vorzugsweise über ein Rückwandbus-System miteinander verbunden.

Eine Bedien- und Beobachtungsstation 302 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Die Zellen-Switches 201 umfassen jeweils mehrere Kommunikationsanschlüsse zur Verbindung mit den von der jeweiligen Zelle 200 umfassten Automatisierungsgeräten 202 und zur Verbindung mit dem Router 101. Den Kommunikationsanschlüssen ist jeweils eine durch eine PHY- und MAC-Funktionseinheit realisierte Sende- und Empfangseinheit 210 zugeordnet. Außerdem umfassen die Zellen-Switches 201 jeweils eine Funktionseinheit 213 zur Verarbeitung eines IPv6-Kommunikationsprotokollstacks, die über Treiber auf die Sende- und Empfangseinheiten 210 zugreift. Darüber hinaus weisen die Zellen-Switches 201 jeweils ein Koppelelement 211 auf, durch das die Sende- und Empfangseinheiten 210 schaltbar miteinander verbindbar sind. Das Koppelelement 211 ist im vorliegenden Ausführungsbeispiel durch einen Backplane-Switch mit zugeordnetem Controller realisiert.

Jeder Zellen-Switch 201 ist dafür ausgestaltet und eingerichtet, insbesondere durch Konfiguration, anhand eines von einer empfangenen Router-Bekanntgabe-Nachricht 110 umfassten IPv6-Präfixes seine IPv6-Adresse zu ermitteln und empfangene Router-Bekanntgabe-Nachrichten an eine Verteilereinheit 212 weiterzuleiten, die mit dem Koppelelement 211 verbunden ist. Im vorliegenden Ausführungsbeispiel sind die Router-Bekanntgabe-Nachrichten Router Advertisements entsprechend IETF RFC 4861, während die Verteilereinheiten 212 der Zellen-Switches 201 Router Advertisement Relays sind.

Router-Bekanntgabe-Nachrichten 110 des Routers 101, die durch die Zellen-Switches 201 empfangen worden sind, werden nach ihrer Weiterleitung an die Verteilereinheit 212 durch die Verteilereinheit 212 um eine Angabe über einen der jeweiligen Zelle 200 zugeordneten Namensdienst-Server 214 ergänzt. Im vorliegenden Ausführungsbeispiel sind die den Zellen 200 zugeordneten Namensdienst-Server 214 jeweils in die Zellen-Switches 201 integriert. Dabei sind die Namensdienst-Server 214 jeweils an die Funktionseinheit 212 zur Verarbeitung des IPv6-Kommunikationsprotokollstacks gekoppelt. Auf diese Weise kann die Angabe über den Namensdienst-Server 214, nämlich die IPv6-Adresse des jeweiligen Zellen-Switches 201, einfach durch die Funktionseinheit 212 zur Verarbeitung des IPv6-Kommunikationsprotokollstacks bereitgestellt werden.

Die Zellen-Switches 201 verbreiten die durch ihre Verteilereinheiten 212 ergänzten Router-Bekanntgabe-Nachrichten 220 an die Automatisierungsgeräte 202 in ihrer jeweiligen Zelle 200, vorzugsweise mittels Recursive DNS Server Option entsprechend IETF RFC 8106. Durch die Automatisierungsgeräte 202 werden von empfangenen ergänzten Router-Bekanntgabe-Nachrichten 220 umfasste Angaben über den der jeweiligen Zelle 200 zugeordneten Namensdienst-Server 214 an eine Namensdienst-Funktionseinheit weitergeleitet. Die Namensdienst-Funktionseinheit ist insbesondere ein DNS-Client des jeweiligen Automatisierungsgeräts 202, der die Angaben über den der jeweiligen Zelle 200 zugeordneten Namensdienst-Server 214 für seine eigene Konfiguration verwendet. Namensauflösungsanfragen der Automatisierungsgeräte 202 werden dementsprechend mittels der jeweiligen Namensdienst-Funktionseinheit entsprechend ihrer Konfiguration an den zugeordneten Namensdienst-Server 214 übermittelt. Darüber hinaus ermitteln im vorliegenden Ausführungsbeispiel auch die Automatisierungsgeräte 202 anhand der von ergänzten Router-Bekanntgabe-Nachrichten 220 umfassten IPv6-Präfixe selbständig ihre jeweilige IPv6-Adresse.

Die durch die Zellen-Switches 201 empfangenen Router-Bekanntgabe-Nachrichten 110 des Routers 101 umfassen zusätzlich ein dem Router 101 zugeordnetes Domänennamen-Suffix. Dementsprechend werden die Router-Bekanntgabe-Nachrichten 110 durch die Verteilereinheiten 212 jeweils um eine Angabe über einen der jeweiligen Zelle 200 zugeordneten Namen ergänzt, der beispielsweise aus einer Speichereinheit 216 mit Konfigurationsdaten des jeweiligen Zellen-Switches 201 ausgelesen wird. Die Zellen-Switches 201 verbreiten dann die durch ihre Verteilereinheiten 212 ergänzten Domänennamen-Suffixes mittels der Router-Bekanntgabe-Nachrichten 220 für die Automatisierungsgeräte 202 ihrer jeweiligen Zelle 200. Dabei werden die Domänennamen-Suffixes vorzugsweise mittels DNS Search List Option entsprechend IETF RFC 8106 verbreitet. Die durch die Verteilereinheiten 212 der Zellen-Switches 201 ergänzten Domänennamen-Suffixes werden jeweils auch an eine DNS-Konfigurationseinheit 215 des der jeweiligen Zelle 200 zugeordneten Namensdienst-Servers 214 bereitgestellt und zu dessen Konfiguration verwendet.

Im vorliegenden Ausführungsbeispiel umfassen die durch die Zellen-Switches 201 empfangenen Router-Bekanntgabe-Nachrichten 110 des Routers 101 auch eine Angabe über den übergeordneten DNS-Server 104, die ebenfalls zur Konfiguration des der jeweiligen Zelle 200 zugeordneten Namensdienst-Servers 214 verwendet wird. Dementsprechend werden die Namensauflösungsanfragen der Automatisierungsgeräte 202 in Abhängigkeit von einem jeweils spezifizierten Domänennamen-Suffix entweder durch den Namensdienst-Server 214 der jeweiligen Zelle 200 behandelt oder an den übergeordneten DNS-Server 104 zur Namensauflösung weitergeleitet. Vorzugsweise werden Namensauflösungsanfragen mit der jeweiligen Zelle 200 nicht zugeordneten Domänennamen-Suffixes durch den Namensdienst-Server 214 der jeweiligen Zelle 200 an den übergeordneten DNS-Server 104 delegiert.

Die Automatisierungsgeräte 202 leiten von empfangenen Router-Bekanntgabe-Nachrichten 220 umfasste Domänennamen-Suffixes jeweils an ihre Namensdienst-Funktionseinheit weiter. Die Domänennamen-Suffixes werden dann durch die Namensdienst-Funktionseinheiten jeweils für ihre Namensdienst-Konfiguration verwendet. Auf Grundlage dessen erzeugen die Namensdienst-Funktionseinheiten aus dem jeweiligen Domänennamen-Suffix und einem Host-Namen des jeweiligen Automatisierungsgeräts 202 jeweils einen vollständig qualifizierten Domänennamen für das jeweilige Automatisierungsgerät. Im vorliegenden Ausführungsbeispiel fordern die Automatisierungsgeräte 202 jeweils mittels ihrer Namensdienst-Funktionseinheit eine Speicherung ihrer Kommunikationsnetzadresse sowie ihres vollständig qualifizierten Domänennamens in dem ihrer Zelle 200 zugeordneten Namensdienst-Server 214 an. Im jeweiligen Namensdienst-Server 214 werden die Automatisierungsgeräte 202 innerhalb einer für den Namensdienst-Server 214 konfigurierten DNS-Zone registriert. Dabei ergibt sich die jeweils konfigurierte DNS-Zone beispielsweise aus dem Domänennamen-Suffix, das dem Router 101 zugeordnet ist, sowie aus dem Namen der jeweiligen Zelle 200. Die Automatisierungsgeräte 202 registrieren sich jeweils vorzugsweise mittels DNS UPDATE entsprechend IETF RFC 2136 innerhalb o.g. DNS-Zone.

## Patentansprüche

1. Verfahren zur Bereitstellung eines Namensdienstes innerhalb eines industriellen Automatisierungssystems, bei dem
- das industrielle Automatisierungssystem mehrere Zellen (200) mit jeweils mehreren Automatisierungsgeräten (202) und einem Zellen-Switch (201) umfasst, der die Automatisierungsgeräte innerhalb seiner Zelle zumindest mittelbar miteinander verbindet,
- die Zellen-Switches (201) mit einem zugeordneten Router (101) verbunden sind, der IPv6-Präfixe mittels Router-Bekanntgabe-Nachrichten (110) in unterlagerte Teilnetze (110) verbreitet,
- die Zellen-Switches (201) und/oder die Automatisierungsgeräte (202) anhand der von Router-Bekanntgabe-Nachrichten (110, 220) umfassten IPv6-Präfixe ihre jeweilige IPv6-Adresse ermitteln,
- durch die Zellen-Switches (201) empfangene Router-Bekanntgabe-Nachrichten (110) des zugeordneten Routers (101) an eine Verteilereinheit (212) des jeweiligen Zellen-Switches (201) weitergeleitet und durch die Verteilereinheit (212) um eine Angabe über einen der jeweiligen Zelle (200) zugeordneten Namensdienst-Server (214) ergänzt werden,
- die Zellen-Switches (201) die durch ihre Verteilereinheiten (212) ergänzten Router-Bekanntgabe-Nachrichten (220) an die Automatisierungsgeräte (202) in ihrer jeweiligen Zelle (200) verbreiten,
- durch die Automatisierungsgeräte (202) von empfangenen Router-Bekanntgabe-Nachrichten (220) umfasste Angaben über den der jeweiligen Zelle (200) zugeordneten Namensdienst-Server (214) an eine Namensdienst-Funktionseinheit des jeweiligen Automatisierungsgeräts weitergeleitet werden und durch die Namensdienst-Funktionseinheit für ihre Konfiguration verwendet werden,
- Namensauflösungsanfragen der Automatisierungsgeräte (202) mittels der jeweiligen Namensdienst-Funktionseinheit entsprechend ihrer Konfiguration an den zugeordneten Namensdienst-Server (214) übermittelt werden.

2. Verfahren nach Anspruch 1,
bei dem die durch die Zellen-Switches (201) empfangenen Router-Bekanntgabe-Nachrichten (110) des zugeordneten Routers (101) ein diesem Router zugeordnetes Domänennamen-Suffix umfassen und durch die Verteilereinheiten (212) jeweils um eine Angabe über einen der jeweiligen Zelle zugeordneten Namen ergänzt werden und bei dem die Zellen-Switches (201) die durch ihre Verteilereinheiten (212) ergänzten Domänennamen-Suffixes mittels der Router-Bekanntgabe-Nachrichten (220) für die Automatisierungsgeräte (202) ihrer jeweiligen Zelle (200) verbreiten.

3. Verfahren nach Anspruch 2,
bei dem die Automatisierungsgeräte (202) von empfangenen Router-Bekanntgabe-Nachrichten (220) umfasste Domänennamen-Suffixes jeweils an ihre Namensdienst-Funktionseinheit weiterleiten, bei dem die Domänennamen-Suffixes durch die Namensdienst-Funktionseinheiten jeweils für ihre Namensdienst-Konfiguration verwendet werden und bei dem die Namensdienst-Funktionseinheiten aus dem jeweiligen Domänennamen-Suffix und einem Host-Namen des jeweiligen Automatisierungsgeräts (202) jeweils einen vollständig qualifizierten Domänennamen für das jeweilige Automatisierungsgerät erzeugen.

4. Verfahren nach Anspruch 3,
bei dem die Automatisierungsgeräte (202) jeweils mittels ihrer Namensdienst-Funktionseinheit eine Speicherung ihrer Kommunikationsnetzadresse sowie ihres vollständig qualifizierten Domänennamens in dem ihrer Zelle (200) zugeordneten Namensdienst-Server (214) anfordern.

5. Verfahren nach einem der Ansprüche 2 bis 4,
bei dem die durch die Verteilereinheiten (212) der Zellen-Switches (201) ergänzten Domänennamen-Suffixes jeweils zur Konfiguration des der jeweiligen Zelle (200) zugeordneten Namensdienst-Servers (214) verwendet werden.

6. Verfahren nach einem der Ansprüche 2 bis 5,
bei dem die Domänennamen-Suffixes mittels DNS Search List Option entsprechend IETF RFC 8106 verbreitet werden.

7. Verfahren nach einem der Ansprüche 1 bis 6,
bei dem die Angaben über den der jeweiligen Zelle (200) zugeordneten Namensdienst-Server (214) mittels Recursive DNS Server Option entsprechend IETF RFC 8106 verbreitet werden.

8. Verfahren nach einem der Ansprüche 1 bis 7,
bei dem die Zellen-Switches (201) jeweils vom zugeordneten Router (101) separierte Kommunikationsgeräte sind.

9. Verfahren nach einem der Ansprüche 1 bis 8,
bei dem die Zellen-Switches (201) jeweils die Automatisierungsgeräte (202) innerhalb ihrer Zelle (200) unmittelbar oder über weitere Switches miteinander verbinden.

10. Verfahren nach einem der Ansprüche 1 bis 9,
bei dem die Zellen-Switches (201) jeweils den ihrer Zelle (200) zugeordneten Namensdienst-Server (214) umfassen.

11. Verfahren nach Anspruch 10,
bei dem die Zellen-Switches (201) jeweils eine Funktionseinheit (213) zur Verarbeitung eines IPv6-Kommunikationsprotokollstacks umfassen, an die der jeweilige Namensdienst-Server (214) gekoppelt ist.

12. Verfahren nach einem der Ansprüche 1 bis 11,
bei dem die durch die Zellen-Switches (201) empfangenen Router-Bekanntgabe-Nachrichten (110) des zugeordneten Routers (101) eine Angabe über einen der jeweiligen Zelle (200) übergeordneten Namensdienst-Server (104) umfassen, bei dem die Angabe über den übergeordneten Namensdienst-Server (104) jeweils zur Konfiguration des der jeweiligen Zelle (200) zugeordneten Namensdienst-Servers (214) verwendet wird und bei dem die Namensauflösungsanfragen der Automatisierungsgeräte (202) in Abhängigkeit von einem jeweils spezifizierten Domänennamen-Suffix entweder durch den Namensdienst-Server (214) der jeweiligen Zelle (200) behandelt werden oder durch diesen an den übergeordneten Namensdienst-Server (104) zur Namensauflösung weitergeleitet werden.

13. Verfahren nach einem der Ansprüche 1 bis 12,
bei dem die Zellen (200) jeweils als einheitliche Sicherungsschicht-Broadcast-Domäne betrieben werden.

14. Verfahren nach einem der Ansprüche 1 bis 12,
bei dem die Router-Bekanntgabe-Nachrichten Router Advertisements entsprechend IETF RFC 4861 sind und bei dem die Verteilereinheiten (212) der Zellen-Switches (201) Router Advertisement Relays sind.

15. Switch für eine Zelle eines industriellen Automatisierungssystems mit
- mehreren Kommunikationsanschlüssen zur Verbindung mit von der Zelle (200) umfassten Automatisierungsgeräten (202) und zur Verbindung mit einem Router (101),
- mehreren jeweils einem Kommunikationsanschluss zugeordneten Sende- und Empfangseinheiten (210),
- einem Koppelelement (211), durch das die Sende- und Empfangseinheiten (210) schaltbar miteinander verbindbar sind,
- einer Verteilereinheit (212) für Router-Bekanntgabe-Nachrichten (110, 220),
- wobei der Switch (201) dafür ausgestaltet und eingerichtet ist, anhand eines von einer empfangenen Router-Bekanntgabe-Nachricht (110) umfassten IPv6-Präfixes seine IPv6-Adresse zu ermitteln und empfangene Router-Bekanntgabe-Nachrichten an die Verteilereinheit (212) weiterzuleiten,
- wobei die Verteilereinheit (212) dafür ausgestaltet und eingerichtet ist, empfangene Router-Bekanntgabe-Nachrichten (110) um eine Angabe über einen der Zelle (200) zugeordneten Namensdienst-Server (214) zu ergänzen,
- wobei der Switch (201) dafür ausgestaltet und eingerichtet ist, die durch die Verteilereinheit (212) ergänzten Router-Bekanntgabe-Nachrichten (220) an die Automatisierungsgeräte (202) in der Zelle (200) zu verbreiten und Namensauflösungsanfragen der von der Zelle umfassten Automatisierungsgeräte an den der Zelle zugeordneten Namensdienst-Server (214) zu übermitteln.

16. Switch nach Anspruch 15,
bei dem das Koppelelement (211) ein Backplane-Switch mit zugeordnetem Controller ist.

## Claims

1. Method for providing a name service within an industrial automation system, in which
- the industrial automation system comprises a plurality of cells (200) each having a plurality of automation devices (202) and a cell switch (201) that connects the automation devices within its cell to one another at least indirectly,
- the cell switches (201) are connected to an assigned router (101) that broadcasts IPv6 prefixes into subordinate subnetworks (110) by way of router announcement messages (110),
- the cell switches (201) and/or the automation devices (202) determine their respective IPv6 address using the IPv6 prefixes contained in router announcement messages (110, 220),
- router announcement messages (110), received by the cell switches (201), of the assigned router (101) are forwarded to a broadcast unit (212) of the respective cell switch (201) and supplemented, by the broadcast unit (212), with information about a name service server (214) assigned to the respective cell (200),
- the cell switches (201) broadcast the router announcement messages (220), supplemented by their broadcast units (212), to the automation devices (202) in their respective cell (200),
- information, contained in received router announcement messages (220), about the name service server (214) assigned to the respective cell (200) is forwarded to a name service functional unit of the respective automation device by the automation devices (202) and is used by the name service functional unit for its configuration,
- name resolution queries of the automation devices (202) are transmitted, by way of the respective name service functional unit, according to its configuration, to the assigned name service server (214).

2. Method according to Claim 1,
in which the router announcement messages (110), received by the cell switches (201), of the assigned router (101) comprise a domain name suffix assigned to this router and are supplemented, by the broadcast units (212), in each case by information about a name assigned to the respective cell, and in which the cell switches (201) broadcast the domain name suffixes, supplemented by their broadcast units (212), by way of the router announcement messages (220) for the automation devices (202) of their respective cell (200).

3. Method according to Claim 2,
in which the automation devices (202) forward domain name suffixes contained in received router announcement messages (220) in each case to their name service functional unit, in which the domain name suffixes are in each case used by the name service functional units for their name service configuration, and in which the name service functional units in each case generate a completely qualified domain name for the respective automation device from the respective domain name suffix and a host name of the respective automation device (202) .

4. Method according to Claim 3,
in which the automation devices (202) in each case, by way of their name service functional unit, request storage of their communication network address and of their completely qualified domain name in the name service server (214) assigned to their cell (200).

5. Method according to one of Claims 2 to 4,
in which the domain name suffixes, supplemented by the broadcast units (212) of the cell switches (201), are used in each case to configure the name service server (214) assigned to the respective cell (200).

6. Method according to one of Claims 2 to 5,
in which the domain name suffixes are broadcast by way of a DNS search list option in accordance with IETF RFC 8106.

7. Method according to one of Claims 1 to 6,
in which the information about the name service server (214) assigned to the respective cell (200) is broadcast by way of a recursive DNS server option in accordance with IETF RFC 8106.

8. Method according to one of Claims 1 to 7,
in which the cell switches (201) are in each case communication devices separated by the assigned router (101).

9. Method according to one of Claims 1 to 8,
in which the cell switches (201) in each case connect the automation devices (202) within their cell (200) to one another directly or by way of further switches.

10. Method according to one of Claims 1 to 9,
in which the cell switches (201) each comprise the name service server (214) assigned to their cell (200).

11. Method according to Claim 10,
in which the cell switches (201) each comprise a functional unit (213) for processing an IPv6 communication protocol stack and to which the respective name service server (214) is coupled.

12. Method according to one of Claims 1 to 11,
in which the router announcement messages (110), received by the cell switches (201), of the assigned router (101) comprise information about a name service server (104) superordinate to the respective cell (200), in which the information about the superordinate name service server (104) is used in each case to configure the name service server (214) assigned to the respective cell (200), and in which the name resolution queries of the automation devices (202), depending on a respectively specified domain name suffix, are either handled by the name service server (214) of the respective cell (200) or forwarded thereby to the superordinate name service server (104) for name resolution purposes.

13. Method according to one of Claims 1 to 12,
in which the cells (200) are in each case operated as a uniform security layer broadcast domain.

14. Method according to one of Claims 1 to 12,
in which the router announcement messages are router advertisements in accordance with IETF RFC 4861 and in which the broadcast units (212) of the cell switches (201) are router advertisement relays.

15. Switch for a cell of an industrial automation system, having
- a plurality of communication connections for connection to automation devices (202) contained in the cell (200) and for connection to a router (101),
- a plurality of transmission and reception units (210) respectively assigned to a communication connection,
- a coupling element (211) by way of which the transmission and reception units (210) are able to be connected to one another in a switchable manner,
- a broadcast unit (212) for router announcement messages (110, 220),
- wherein the switch (201) is designed and configured so as to determine its IPv6 address on the basis of an IPv6 prefix contained in a received router announcement message (110) and to forward received router announcement messages to the broadcast unit (212),
- wherein the broadcast unit (212) is designed and configured so as to supplement received router announcement messages (110) with information about a name service server (214) assigned to the cell (200),
- wherein the switch (201) is designed and configured so as to broadcast the router announcement messages (220), supplemented by the broadcast unit (212), to the automation devices (202) in the cell (200) and to transmit name resolution queries of the automation devices contained in the cell to the name service server (214) assigned to the cell.

16. Switch according to Claim 15,
in which the coupling element (211) is a backplane switch having an assigned controller.

## Revendications

1. Procédé de mise à disposition d'un service de dénomination dans un système d'automatisation industrielle, dans lequel
- le système d'automatisation industrielle comprend plusieurs cellules (200) ayant chacune plusieurs appareils (202) d'automatisation et un switch (201) de cellule, qui relient entre eux, au moins indirectement, les appareils d'automatisation dans sa cellule,
- les switch (201) de cellule sont reliés à un routeur
(101) associé, qui diffuse des préfixes IPv6 au moyen de messages (110) de notification de routeur dans des sous-réseaux (110) subordonnés,
- les switch (201) de cellule et/ou les appareils (202) d'automatisation déterminent leur adresse IPv6 respective à l'aide des préfixes IPv6 compris dans les messages (110, 220) de notification de routeur,
- des messages (110) notifiés de routeur, reçus par les switch (201) de cellule, du routeur (101) associé sont acheminés à une unité (212) de répartiteur du switch (201) de cellule respectif et sont complétés par l'unité (212) de répartiteur d'une indication sur un serveur (214) de service de dénomination associé à la cellule (200) respective,
- les switch (201) de cellule diffusent aux appareils (202) d'automatisation, dans leur cellule (200) respective, les messages (220) de notification de routeur complétés par leurs unités (212) de répartiteur,
- des indications comprises dans des messages (220) de notification de routeur reçus sont, par les appareils (202) d'automatisation, acheminées par le serveur (214) de service de dénomination associé à la cellule (200) respective à une unité de fonction de service de dénomination de l'appareil d'automatisation respectif et sont utilisées par l'unité de fonction de service de dénomination pour sa configuration,
- des demandes de résolution de nom des appareils (202) d'automatisation sont transmis au moyen de l'unité de fonction de service de dénomination respective, conformément à leur configuration, au serveur (214) de service de dénomination associé.

2. Procédé suivant la revendication 1,
dans lequel les messages (110) de notification de routeur reçus par les switch (201) de cellule du routeur (101) associé comprennent un suffixe de nom de domaine associé à ce routeur et sont complétés par les unités (212) de répartiteur, respectivement, d'une indication sur une dénomination associée à la cellule respective et dans lequel les switch (201) de cellule diffusent les suffixes de nom de domaine complétés par leurs unités (212) de répartiteur au moyen des messages (220) de notification de routeur, pour les appareils (202) d'automatisation de leur cellule (200) respective.

3. Procédé suivant la revendication 2,
dans lequel les appareils (202) d'automatisation acheminent des suffixes de dénomination de domaine compris dans des messages (220) de notification de routeur reçus, respectivement, à leurs unités de fonction de service de dénomination, dans lequel les suffixes de dénomination de domaine sont utilisés par les unités de fonction de service de dénomination, respectivement, pour leur configuration de service de dénomination, et dans lequel les unités de fonction de service de dénomination produisent, à partir du suffixe de dénomination de domaine respectif et d'une dénomination hôte de l'appareil (202) d'automatisation respectif, respectivement, une dénomination de domaine qualifiée complètement de l'appareil d'automatisation respectif.

4. Procédé suivant la revendication 3,
dans lequel les appareils (202) d'automatisation demandent chacun, au moyen de leur unité de fonction de service de dénomination, une mémorisation de leur adresse de communication, ainsi que de leur dénomination de domaine qualifiée complètement dans le serveur (214) de service de dénomination associé à leur cellule (200).

5. Procédé suivant l'une des revendications 2 à 4,
dans lequel les suffixes de dénomination de domaine complétés par les unités (212) de répartiteur des switch (201) de cellule sont utilisés, respectivement, pour la configuration du serveur (214) de service de dénomination associé à la cellule (200) respective.

6. Procédé suivant l'une des revendications 2 à 5, dans lequel le suffixes de dénomination de domaine sont diffusés au moyen de DNS Search List Option correspondant à IETF RFC 8106.

7. Procédé suivant l'une des revendications 1 à 6,
dans lequel les indications sur le serveur (214) de service de dénomination associé à la cellule (200) respective sont diffusées au moyen de Recursive DNS Server Option correspondant à IETF RFC 8106.

8. Procédé suivant l'une des revendications 1 à 7, dans lequel les switch de cellule sont chacun des appareils de communications distincts du routeur (101) associé.

9. Procédé suivant l'une des revendications 1 à 8,
dans lequel les switch (201) de cellule relient entre eux les appareils (202) d'automatisation dans leur cellule (200), directement ou par un autre switch.

10. Procédé suivant l'une des revendications 1 à 9,
dans lequel les switch (201) de cellule comprennent chacun leur serveur (214) de service de dénominations associé à leur cellule (200).

11. Procédé suivant la revendication 10,
dans lequel les switch (201) de cellule comprennent chacun une unité (213) de fonction pour traiter une pile de protocole de communication IPv6 à laquelle le serveur (214) de service de dénomination respectif est couplé.

12. Procédé suivant l'une des revendications 1 à 11,
dans lequel les messages (110) de notification de routeur, reçus par les switch (201) de cellule, du routeur (101) associé comprennent une indication sur un serveur (104) de service de dénomination supérieur hiérarchiquement à la cellule (200) respective, dans lequel l'indication sur le serveur (104) de service de dénomination supérieur hiérarchiquement est utilisée respectivement pour la configuration du serveur (214) du service de dénomination associé à la cellule (200) respective, et dans lequel les demandes de résolution de dénomination des appareils (202) d'automatisation sont, en fonction d'un suffixe de dénomination de domaine spécifié respectivement, ou bien traitées par le serveur (214) de service de dénomination de la cellule (200) respective, ou bien acheminées par celui-ci au serveur (104) de service de dénominations supérieur hiérarchiquement, en vu de la résolution de dénomination.

13. Procédé suivant l'une des revendications 1 à 12,
dans lequel on fait fonctionner les cellules (200), respectivement, comme Broadcast domaine à couche de sécurisation unitaire.

14. Procédé suivant l'une des revendications 1 à 12,
dans lequel les messages de notification de routeur sont des routeurs Advertisements correspondant à IETF RFC 4861 et dans lequel les unités (212) de répartiteur des switch (201) de cellule sont des routeurs Advertisement Relays.

15. Switch pour une cellule d'un système d'automatisation industrielle, comprenant
- plusieurs accès de communication pour la liaison à des appareils (202) d'automatisation compris dans la cellule (200), et pour la liaison à un autre routeur (101),
- plusieurs unités (210) d'émetteur et récepteur associées chacune à un accès de communication,
- un élément (211) de couplage, par lequel des unités (210) d'émission et de réception peuvent être reliées les unes aux autres avec possibilité d'interruption,
- une unité (212) de répartiteur de messages (110, 220) de notification de routeur,
- dans lequel le switch (201) est conformé et conçu pour déterminer, à l'aide d'un préfixe IPv6 compris dans un message (110) de notification de routeur reçu, son adresse IPv6 et acheminer des messages de notification de routeur reçus à l'unité (212) de répartiteur,
- dans lequel l'unité (212) de répartiteur est conformée et conçue pour compléter des messages (110) de notification de routeur reçus d'une indication sur un serveur (214) de service de dénomination associé à la cellule (200),
- dans lequel le switch (201) est conformé et conçu pour diffuser les messages (220) de notification de routeur complétés par l'unité (212) de répartiteur aux appareils (202) d'automatisation de la cellule (200) et transmettre des demandes de résolution de dénomination des appareils d'automatisation compris dans la cellule au serveur (214) de service de dénomination associé à la cellule.

16. Switch suivant la revendication 15,
dans lequel l'élément (211) de couplage est un Backplane-Switch à unité de commande associée.
